# EUROPÄISCHE PATENTSCHRIFT

(11) **EP 2 528 799 B1**
(45) Veröffentlichungstag und Bekanntmachung des Hinweises auf die Patenterteilung: **30.10.2013**
(21) Anmeldenummer: 10796392.8
(22) Anmeldetag: 22.12.2010
(51) Int. Cl.: B62B 3/02, B60P 1/16

(54) **PLATTFORMWAGEN MIT VON ZWEI SEITEN HOCHSCHWENKBARER PLATTFORM**
PLATFORM TRUCK HAVING A PLATFORM THAT CAN BE UPWARDLY PIVOTED FROM TWO SIDES
CHARIOT À PLATE-FORMES, MUNI D'UNE PLATE-FORME POUVANT BASCULER VERS LE HAUT DE DEUX CÔTÉS

(30) Priorität: 29.01.2010 DE 102010006388
(43) Veröffentlichungstag der Anmeldung: 05.12.2012
(73) Patentinhaber: LKE Gesellschaft für Logistik- und Kommunikations- Equipment mbH, 45768 Marl (DE)
(72) Erfinder: EIDAMS, Werner, 46282 Dorsten (DE)
(74) Vertreter: Cohausz & Florack
(86) Internationale Anmeldenummer: PCT/EP2010/070525
(87) Internationale Veröffentlichungsnummer: WO 2011/091925

(56) Entgegenhaltungen:
- WO-A2-2007/139759
- DE-A1- 19 651 246
- DE-U1- 7 627 791
- DE-U1- 29 700 107
- US-A1- 2003 062 700
- US-A1- 2007 001 409

## Beschreibung

Die Erfindung betrifft einen Plattformwagen zum Transportieren von Stückgut, insbesondere einen als Anhänger für einen Zugbetrieb ausgebildeten Plattformwagen, der mindestens zwei Laufrollen, eine untere Plattform und eine von Stützelementen getragene obere Plattform aufweist, wobei die obere Plattform aus einer im Wesentlichen horizontalen Position in eine steile oder vertikale Position und umgekehrt schwenkbar ist, wobei die obere Plattform aus ihrer horizontalen Position wahlweise um eine erste Schwenkachse in eine erste steile oder vertikale Position oder um eine zweite Schwenkachse in eine zweite steile oder vertikale Position schwenkbar ist, und wobei die Stützelemente und die obere Plattform mit Paaren von voneinander trennbaren Gelenkelementen versehen sind, wobei mindestens ein Paar der Gelenkelemente die erste Schwenkachse definiert und mindestens ein weiteres Paar der Gelenkelemente die zweite Schwenkachse definiert.

Derartige Plattformwagen, die auch als Transportwagen oder Transportkarren bezeichnet werden, sind in verschiedenen Ausführungen bekannt.

Die DE 76 27 791 U1 offenbart einen Reinigungs- und Gerätewagen gemäß dem Oberbegriff von Anspruch 1, insbesondere zum Einsatz in Krankenhäusern und Hotels, bestehend aus einem mit Rädern versehenen Grundgestell aus Stahlrohr, das mit einem Haltegestell ausgerüstet ist, in das Behälter einhängbar sind. Das Haltegestell besteht aus zwei im Wesentlichen senkrechten, parallel angeordneten U-förmigen Haltebügeln, die jeweils in im Wesentlichen senkrechter Stellung lösbar am Grundgestell befestigt sind. Jeder der Haltebügel ist dabei mit mindestens einer parallel zu seinem Quersteg verlaufenden Querstrebe versehen. Der einhängbare Behälter besteht beispielsweise aus einer Wanne, die an zwei gegenüberliegenden Seiten, z.B. ihren Schmalseiten, mit Griffen versehen ist, die über die Querstege bzw. die Querstreben greifen, derart, dass die Wanne an zwei Querstegen oder zwei Querstreben der beiden Haltebügel aufgehängt ist.

Die US 2007/0001409 A1 offenbart eine transportable Kühlbox mit einem Klappdeckel und Laufrollen, wobei an der Kühlbox über einen Schwenkmechanismus eine tablettartige Platte angebracht ist, die aus einer verstauten, an einer Außenseite der Kühlbox befindlichen Position in eine angehobene, mit Abstand oberhalb des Klappdeckels liegende Position hochklappbar und umgekehrt einklappbar ist. Der Schwenkmechanismus weist dabei zwei parallel zueinander verlaufende Schwenkachsen auf.

In der WO 2007/139759 A2 ist ein anpassungsfähiger Plattformwagen (Transportkarren) dargestellt, der eine obere Plattform und eine untere Plattform mit vier Lenkrollen aufweist, wobei die obere Plattform über zwei vordere und zwei hintere rohrförmige Stützelemente auf der unteren Plattform abgestützt ist. Die hinteren Stützelemente sind mit ihren Enden an einem hinteren Abschnitt der oberen Plattform und einem hinteren Abschnitt der unteren Plattform angelenkt. Dementsprechend sind die vorderen Stützelemente an einem vorderen Abschnitt der oberen Plattform und einem vorderen Abschnitt der unteren Plattform angelenkt. Zur Anlenkung der vorderen Stützelemente an der oberen Plattform sind Gleitgelenke vorgesehen, welche die rohrförmigen Stützelemente umgreifen und mit Verriegelungselementen versehen sind. Durch Lösen der Verriegelungselemente können die Gleitgelenke entlang der vorderen Stützelemente zunächst nach unten gleiten, so dass sich gleichzeitig die obere Plattform mit ihrem vorderen Abschnitt nach unten neigt. Gleichzeitig schwenken die vorderen Stützelemente mit ihren oberen Enden auf die untere Plattform zu. Die vorderen Stützelemente können bis in eine horizontale Position geschwenkt werden, in welcher die obere Plattform dann eine vertikale Position einnimmt. Die Gleitgelenke gleiten dabei wieder an die oberen Enden der Stützelemente zurück. Weiter ist es möglich, die obere Plattform aus dieser vertikalen Position nach unten auf die untere Plattform zu schwenken. Dieser bekannte Plattformwagen kann somit zwar an unterschiedliche Transportaufgaben bzw. Stückgutgrößen angepasst werden, der Verstellmechanismus der oberen Plattform ist jedoch hinsichtlich einer komfortablen Handhabung noch verbesserungsfähig.

Der vorliegenden Erfindung liegt die Aufgabe zugrunde, einen Plattformwagen der eingangs genannten Art zur Verfügung zu stellen, der hinsichtlich einer Positionsverstellung der oberen Plattform eine einfache und komfortable Handhabung bietet.

Diese Aufgabe wird durch einen Plattformwagen mit den Merkmalen des Anspruchs 1 gelöst.

Der Benutzer des Plattformwagens kann die obere Plattform somit bei Bedarf, beispielsweise wenn er relativ großes Stückgut auf der unteren Plattform transportieren möchte, wahlweise von zwei gegenüberliegenden Seiten des Plattformwagens aus in eine erste oder zweite steile oder vertikale Position schwenken. Die Handhabung der oberen Plattform ist dadurch wesentlich vereinfacht und komfortabler als bei Plattformwagen, deren obere Plattform nur um eine einzige Schwenkachse aus der horizontalen Position in eine einzige steile oder vertikale Position geschwenkt werden kann, und bei denen sich der Benutzer gegebenenfalls auf die gegenüberliegende Seite des Plattformwagens begeben muss, um in angenehmer Körperhaltung die Position der oberen Plattform verstellen zu können. Die komfortable Handhabbarkeit des erfindungsgemäßen Plattformwagens ist insbesondere von Vorteil, wenn dessen Plattformen relativ große Abmessungen besitzen und/oder wenn der Plattformwagen für einen Zugbetrieb als Anhänger ausgebildet ist. Denn bei einem Zugverband kann der Benutzer die obere Plattform des jeweiligen erfindungsgemäßen Plattformwagens komfortabel von beiden Seiten des Zuges aus von der horizontalen Position in eine der beiden steilen oder vertikalen Positionen und umgekehrt verstellen.

Unter dem Ausdruck "steile Position" der oberen Plattform wird im vorliegenden Kontext eine Position oder Stellung der oberen Plattform verstanden, in welcher diese in einer Ebene liegt, die mit der Horizontalen einen Winkel im Bereich zwischen 60° und 90°, vorzugsweise im Bereich zwischen 75° und 90° einschließt.

Ferner wird im vorliegenden Kontext unter dem Ausdruck "horizontale Position" der oberen Plattform eine Position oder Stellung der oberen Plattform verstanden, in welcher diese in einer horizontalen oder im wesentlichen horizontalen Ebene liegt, d.h. die Plattform kann auch in einer leicht schräg verlaufenden Ebene liegen, die beispielsweise um 5° gegenüber der Horizontalen geneigt ist.

Die Plattformen des erfindungsgemäßen Plattformwagens selbst oder deren Oberseiten müssen nicht vollkommen eben sein. Sie können beispielsweise auch leicht konkav gewölbt und/oder mit einem umlaufenden Randsteg versehen sein.

Erfindungsgemäß sind die Stützelemente und die obere Plattform mit Paaren voneinander trennbarer Gelenkelementen versehen, wobei mindestens ein Paar der Gelenkelemente die erste Schwenkachse definiert und mindestens ein weiteres Paar der Gelenkelemente die zweite Schwenkachse definiert, und wobei die die jeweilige Schwenkachse definierenden Gelenkelemente mit mindestens einem lösbaren Verriegelungsmittel versehen sind. Hierdurch wird eine besonders zuverlässige sowie sichere Schwenkfunktion der oberen Plattform erzielt.

Das jeweilige Gelenkelemente-Paar ist dabei erfindungsgemäß aus einem U-förmigen Gleitlager und einem darin einsetzbaren, von einer Halterung getragenen Rundstab gebildet. Dergestalt ausgebildete Gelenkelemente-Paare sind in funktionaler Hinsicht sehr zuverlässig und lassen sich relativ kostengünstig realisieren. Des Weiteren ist das Verriegelungsmittel erfindungsgemäß als schwenkbarer Haken ausgebildet, der im Verriegelungszustand den Rundstab umgreift. Dieser erfindungsgemäße Mechanismus zeichnet sich durch eine hohe Zuverlässigkeit, relativ günstige Herstellungskosten sowie eine einfache Bedienbarkeit aus.

Eine vorteilhafte Ausgestaltung des erfindungsgemäßen Plattformwagens sieht vor, dass die obere Plattform mit mindestens einer Sicherungsvorrichtung versehen ist, mittels der die obere Plattform in ihrer jeweiligen steilen oder vertikalen Position gegen ein Zurückschwenken in die horizontale Position festlegbar ist.

In weiterer Ausgestaltung der Erfindung ist die obere Plattform vorzugsweise mit mindestens einem zwei- oder mehrgliedrigen Gelenkarm versehen, wobei ein erstes Glied des Gelenkarms (direkt oder indirekt) an einem der Stützelemente und ein zweites Glied des Gelenkarms (direkt oder indirekt) an der oberen Plattform angelenkt ist, und wobei der Gelenkarm mit einer Schraubendruckfeder oder Gasdruckfeder versehen ist. Der Gelenkarm verbessert die gelenkige Anbindung der schwenkbeweglichen Plattform an das Stützelement bzw. die Stützelemente, während die Schraubendruckfeder bzw. Gasdruckfeder die Schwenkbewegung aus der horizontalen Position in die steilen oder vertikalen Positionen unterstützt und die Plattform in der jeweiligen steilen oder vertikalen Position hält und gegen ein unbeabsichtigtes Zurückschwenken in die horizontale Position sichert.

Vorzugsweise sind an der unteren Plattform eine Deichsel und an dem der Deichsel gegenüberliegende Plattformende eine Anhängerkupplung für eine entsprechende Deichsel eines zweiten Plattformwagens angebracht, wobei die beiden Schwenkachsen der oberen Plattform parallel zu der Mittelachse verlaufen, die sich von der Deichsel zur Anhängerkupplung erstreckt.

Weitere bevorzugte und vorteilhafte Ausgestaltungen des erfindungsgemäßen Plattformwagens sind in den Unteransprüchen angegeben.

Nachfolgend wird die Erfindung anhand einer ein Ausführungsbeispiel darstellenden Zeichnung näher erläutert. Es zeigen:
- Fig. 1: einen erfindungsgemäßen Plattformwagen mit einer oberen Plattform und einer unteren Plattform in perspektivischer Darstellung;
- Fig. 2: den Plattformwagen der Fig. 1 in perspektivischer Darstellung, wobei die obere Plattform um eine linksseitige Schwenkachse nach oben geschwenkt ist; und
- Fig. 3: den Plattformwagen der Fig. 1 wiederum in perspektivischer Darstellung, wobei die obere Plattform um eine rechtsseitige Schwenkachse nach oben geschwenkt ist.

Der in der Zeichnung dargestellte Plattformwagen 1 ist für ein Transportieren von Stückgut, zum Beispiel von Paketen, Behältern, Kisten, Säcken, Materialrollen, Fässern und/oder Paletten bestimmt. Der Plattformwagen 1 ist insbesondere zur Materialbereitstellung in Produktionsbetrieben und/oder zum Kommissionieren von Waren geeignet.

Der Plattformwagen (Transportkarren) 1 weist eine untere Plattform 2 und eine obere Plattform 3 auf. Die beiden Plattformen 2, 3 sind aus Gitterplatten ausgebildet und besitzen ein im Wesentlichen rechteckiges Format. Anstelle von Gitterplatten können zum Aufbau der Plattformen auch Holzplatten oder Blechplatten verwendet werden. Die untere Plattform (Gitterplatte) 2 ist in einen rechteckigen Grundrahmen 4 eingesetzt, an dessen Unterseite vier Laufrollen 5, 6 angebracht sind. An der unteren Plattform 2, und zwar an der vorderen Stirnseite des Grundrahmens 4 ist eine in vertikaler Richtung schwenkbare Deichsel 7 montiert. Die Deichsel 7 ist gabelförmig ausgebildet, wobei ihre beiden voneinander beabstandeten Gabelabschnitte 7.1, 7.2 am Grundrahmen 4 angelenkt sind. Die Deichsel 7 ist vorzugsweise mit einer Feder versehen, welche die Deichsel 7 aus einer nach unten geschwenkten Stellung automatisch nach oben in eine in der Zeichnung dargestellte Nichtgebrauchsstellung schwenkt. Bei der Deichsel 7 handelt es sich somit um eine selbstsichernde Deichsel. An der Heckseite (hintere Stirnseite) der unteren Plattform 2 bzw. des Grundrahmens 4 ist eine Anhängerkupplung 8 angebracht. Die Anhängerkupplung 8 ist für eine entsprechende Deichsel 7 eines zweiten Plattformwagens ausgebildet. Mehrere solcher Plattformwagen 1 können somit zu einem Zugverband zusammengestellt werden.

Von den vier Laufrollen 5, 6 sind zumindest zwei Laufrollen als Lenkrollen ausgeführt. In dem dargestellten Ausführungsbeispiel sind zumindest die beiden vorderen Laufrollen 5 als Lenkrollen ausgebildet. Die hinteren Laufrollen 6 können als (nicht-lenkbare) Bockrollen ausgeführt sein; vorzugsweise sind jedoch auch sie als Lenkrollen ausgeführt. Ferner liegt es im Rahmen der Erfindung, zumindest zwei der Lenkrollen als feststellbare Lenkrollen auszuführen, so dass diese wahlweise nach Art einer nicht-lenkbaren Bockrolle oder als frei lenkbaren Rolle verwendet werden können.

Des Weiteren ist an der Heckseite der unteren Plattform 2 ein Quersteg 9 angebracht, an dem ein U-förmiger Handbügel (Griffbügel) 10 befestigt ist. Der Handbügel (Griffbügel) 10 ist starr mit dem Quersteg 9 verbunden und ragt mit leicht gekippter Schrägstellung steil nach oben von der Ladefläche weg. Die Höhe des plattenförmigen Querstegs 9 überragt die Anhängerkupplung 8, so dass diese vor einem Kontakt oder Aufprall von auf der unteren Plattform 2 abgelegten Gegenständen geschützt ist. Der Handbügel 10 ist so bemessen, dass er die obere Plattform 3 in deren horizontalen Position (Lage) nach oben überragt.

Auf dem Grundrahmen 4 bzw. der unteren Plattform 2 sind Stützelemente 11.1, 11.2, 12.1, 12.2 montiert, welche die obere Plattform 3 tragen. Die Stützelemente 11.1, 11.2, 12.1, 12.2 bestehen aus Metallrohren, die mit daran angeschweißten Fußplatten 13 mit der Oberseite der unteren Plattform 2 kraft- und/oder formschlüssig verbunden sind. Die beiden vorderen Stützelemente 11.1, 11.2 sowie die beiden hinteren Stützelemente 12.1, 12.2 sind durch einen Querträger 14, 15 verbunden, der vorzugsweise ebenfalls aus einem Metallrohr gefertigt ist.

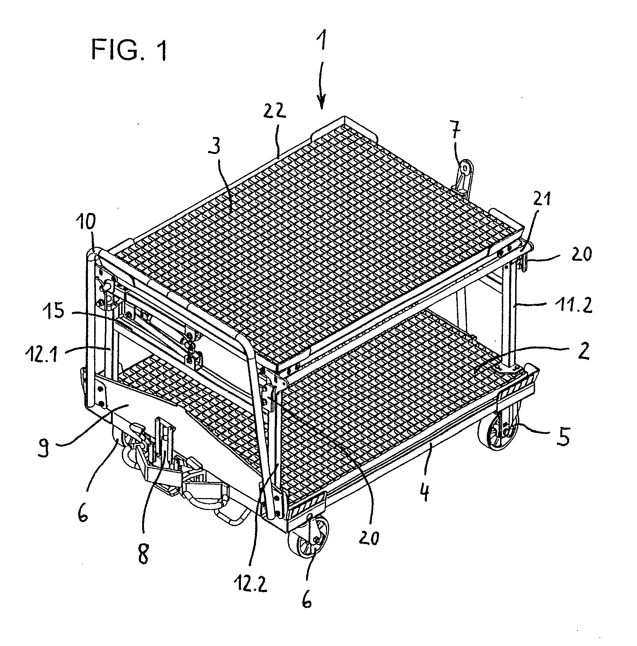

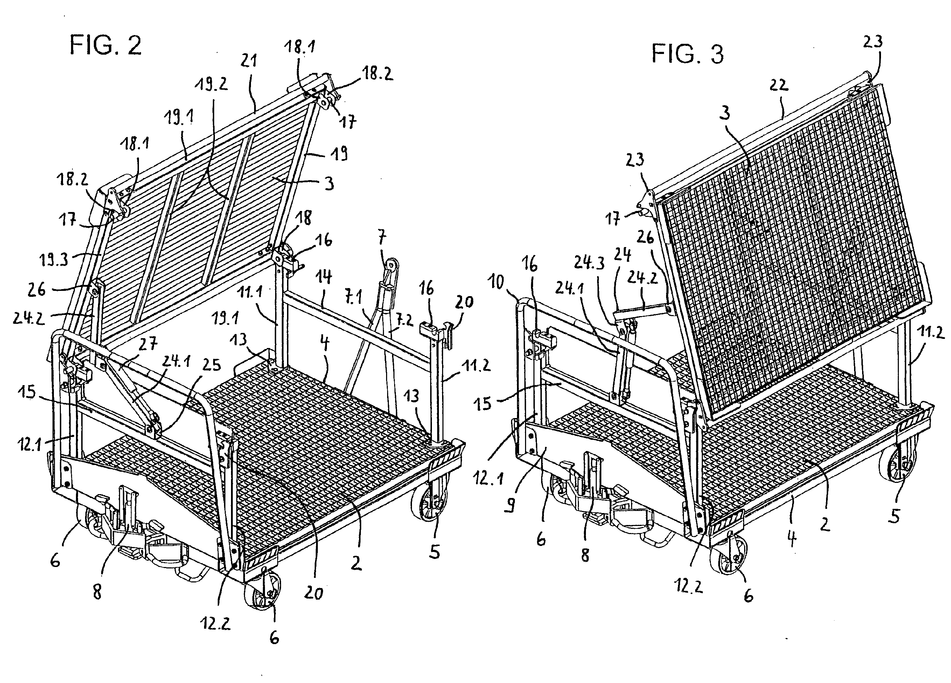

Erfindungsgemäß kann die obere Plattform 3 von beiden Seiten des Plattformwagens 1 aus angehoben werden, und zwar aus ihrer in Fig. 1 dargestellten horizontalen Position wahlweise um eine erste Schwenkachse in eine erste vertikale oder steile Position (vgl. Fig. 2) sowie um eine zweite Schwenkachse, die parallel zur ersten Schwenkachse verläuft, in eine zweite vertikale oder steile Position (vgl. Fig. 3).

Hierzu sind die Stützelemente 11.1, 11.2, 12.1, 12.2 und die obere Plattform 3 mit voneinander trennbaren Gelenkelementen 16, 17 versehen, die paarweise zusammenwirken und jeweils aus einem U-förmigen Gleitlager 16 und einem darin einsetzbaren, von einer Halterung 18 getragenen Rundstab 17 gebildet sind. Die Gleitlager 16 sind an den oberen Enden der rohrförmigen Stützelemente 11.1, 11.2, 12.1, 12.2 befestigt. Die darin formschlüssig einsetzbaren Rundstäbe 17 werden jeweils von zwei laschenförmigen, parallel zueinander angeordneten Haltern 18.1, 18.2 getragen, die von der Unterseite der oberen Plattform 3 abstehen. Die beiden Halter 18.1, 18.2 können beispielsweise durch die beiden Schenkel eines gabelförmigen Metallbügels 18 gebildet sein. Der jeweilige Metallbügel 18 ist an der Unterseite eines mit der oberen Plattform 3 verbunden rechteckigen Rahmens 19 befestigt, wobei die Metallbügel 18 in den Ecken des Rahmens 19 angeordnet sind. Zur Verstärkung der oberen Plattform 3 sind die Längsträger 19.1 des Rahmens 19 durch innere Querträger 19.2 miteinander verbunden.

Das am vorderen rechten Stützelement 11.1 angebrachte Gelenkelement 16 und das am hinteren rechten Stützelement 12.1 angebrachte Gelenkelement 16 definieren zusammen eine erste Schwenkachse der oberen Plattform 3. Dementsprechend definieren das am vorderen linken Stützelement 11.2 angebrachte Gelenkelement 16 und das am hinteren linken Stützelement 12.2 angebrachte Gelenkelement 16 zusammen eine zweite Schwenkachse der oberen Plattform 3.

Die Gelenkelemente-Paare 16, 17 sind mit lösbaren Verriegelungsmittel 20 versehen. In dem dargestellten Ausführungsbeispiel sind die Verriegelungsmittel 20 ebenfalls an den oberen Enden der vertikalen Stützelemente 11.1, 11.2, 12.1, 12.2 montiert. Die Verriegelungsmittel 20 bestehen aus schwenkbar an den Stützelementen 11.1, 11.2, 12.1, 12.2 gelagerten Haken, die im Verriegelungszustand die an der oberen Plattform 3 gehalterten Rundstäbe 17 umgreifen. Die Rundstäbe 17 stehen hierzu an der Vorderseite bzw. an der Heckseite des Plattformwagens 1 gegenüber den Haltern bzw. Schenkeln 18.2 des Metallbügels 18 in Richtung der Verriegelungsmittel 20 vor. Die schwenkbar gelagerten Verriegelungsmittel (Haken) 20 sind vorzugsweise federbelastet, so dass sie in die Verriegelungsposition vorgespannt sind.

Die obere Plattform 3 ist an ihren Außenseiten mit Griffstangen 21, 22 versehen, die parallel zu den beiden Schwenkachsen der oberen Plattform 3 verlaufend angeordnet sind. Die Griffstangen 21, 22 sind vorzugsweise mit Befestigungswinkeln 23 an den Außenseiten der Längsträger 19.1 des Metallrahmens 19 montiert und erstrecken sich vorzugsweise über die volle Länge der oberen Plattform 3.

Des Weiteren ist die obere Plattform 3 mit einem zweigliedrigen Gelenkarm 24 versehen. Das untere Glied 24.1 des Gelenkarms 24 ist an dem mit den hinteren Stützelementen 12.1, 12.2 verbundenen Querträger 15 angelenkt, während das obere Gelenkarmglied 24.2 an der oberen Plattform 3 bzw. dem die Plattform 3 tragenden Metallrahmen 19 angelenkt ist. Die beiden Anlenkpunkte des Gelenkarms 24 sind mittig zwischen den hinteren Stützelementen 12.1, 12.2 bzw. in der Mitte des hinteren Querträgers 19.3 des Metallrahmens 19 angeordnet.

Als Anlenkpunkte dienen gabelförmige Metallwinkel 25, 26, die an den Querträgern 15, 19.3 angeschraubt oder angeschweißt sind. An dem oberen Gelenkarmglied 24.2 ist eine radial abstehende Gelenkgabel 24.3 befestigt, über die dieses Glied 24.2 an dem unteren Gelenkarmglied 24.1 angelenkt ist. Ferner ist der Gelenkarm 24 mit einer Gasdruckfeder 27 versehen. Die Gasdruckfeder 27 ist mit einem Ende am unteren Ende des unteren Gelenkarmgliedes 24.1 und mit dem anderen Ende am oberen Gelenkarmglied 24.2 nahe der Gelenkgabel 24.3 angelenkt. An dem Querträger 15 und/oder an den hinteren Stützelementen 12.1, 12.2 ist eine Schutzplatte 28 befestigt, die zwischen der Ladefläche des Plattformwagens 1 und dem Gelenkarm 24 angeordnet ist und letzteren vor einem Kontakt oder Aufprall von auf der unteren Plattform 2 abgestellten Gegenständen schützt.

Die Ausführung der Erfindung ist nicht auf das vorstehend beschriebene und in der Zeichnung dargestellte Ausführungsbeispiel beschränkt. Vielmehr sind zahlreiche Varianten möglich, die auch bei abweichender Gestaltung von der in den Ansprüchen angegebenen Erfindung Gebrauch machen.

## Patentansprüche

1. Plattformwagen (1) zum Transportieren von Stückgut, insbesondere als Anhänger für einen Zugbetrieb ausgebildeter Plattformwagen (1), mit mindestens zwei Laufrollen (5, 6), einer unteren Plattform (2) und einer von Stützelementen (11.1, 11.2, 12.1, 12.2) getragenen oberen Plattform (3), die aus einer im Wesentlichen horizontalen Position in eine steile oder vertikale Position und umgekehrt schwenkbar ist, wobei die obere Plattform (3) aus ihrer horizontalen Position wahlweise um eine erste Schwenkachse in eine erste steile oder vertikale Position oder um eine parallel zur ersten Schwenkachse verlaufende zweite Schwenkachse in eine zweite steile oder vertikale Position schwenkbar ist, und wobei die Stützelemente (11.1, 11.2, 12.1, 12.2) und die obere Plattform (3) mit Paaren von voneinander trennbaren Gelenkelementen (16, 17) versehen sind, wobei mindestens ein Paar der Gelenkelemente (16, 17) die erste Schwenkachse definiert und mindestens ein weiteres Paar der Gelenkelemente (16, 17) die zweite Schwenkachse definiert, **dadurch gekennzeichnet, dass** die die jeweilige Schwenkachse definierenden Gelenkelemente (16, 17) mit mindestens einem lösbaren Verriegelungsmittel (20) versehen sind, wobei das jeweilige Gelenkelemente-Paar (16, 17) aus einem U-förmigen Gleitlager (16) und einem darin einsetzbaren, von einer Halterung (18) getragenen Rundstab (17) gebildet ist, und wobei das Verriegelungsmittel (20) als schwenkbarer Haken ausgebildet ist, der im Verriegelungszustand den Rundstab (17) umgreift.

2. Plattformwagen nach Anspruch 1, **dadurch gekennzeichnet, dass** die obere Plattform (3) mit mindestens einer Sicherungsvorrichtung (24, 27) versehen ist, mittels der die obere Plattform (3) in ihrer jeweiligen steilen oder vertikalen Position gegen ein Zurückschwenken in die horizontale Position festlegbar ist.

3. Plattformwagen nach Anspruch 1 oder 2, **dadurch gekennzeichnet, dass** die obere Plattform (3) mit mindestens einem zwei- oder mehrgliedrigen Gelenkarm (24) versehen ist, wobei ein erstes Glied (24.1) des Gelenkarms an einem der Stützelemente (12.1, 12.2) und ein zweites Glied (24.2) des Gelenkarms an der oberen Plattform (3) angelenkt ist, und wobei der Gelenkarm (24) mit einer Schraubendruckfeder oder Gasdruckfeder (27) versehen ist.

4. Plattformwagen nach einem der Ansprüche 1 bis 3, **dadurch gekennzeichnet, dass** die obere Plattform (3) an ihren Außenseiten mit Griffstangen (21, 22) versehen ist, die parallel zu den Schwenkachsen der oberen Plattform (3) verlaufend angeordnet sind.

5. Plattformwagen nach einem der Ansprüche 1 bis 4, **dadurch gekennzeichnet, dass** an der unteren Plattform (3) eine Deichsel (7) und eine Anhängerkupplung (8) für eine entsprechende Deichsel (7) eines zweiten Plattformwagens (1) angebracht sind, wobei die Schwenkachsen der oberen Plattform (3) parallel zu einer sich von der Deichsel (7) zur Anhängerkupplung (8) erstreckenden Mittelachse verlaufen.

6. Plattformwagen nach einem der Ansprüche 1 bis 5, **dadurch gekennzeichnet, dass** die Stützelemente (11.1, 11.2, 12.1, 12.2) aus miteinander verbundenen Rohren gebildet sind.

7. Plattformwagen nach einem der Ansprüche 1 bis 6, **dadurch gekennzeichnet, dass** an der unteren Plattform (2) und/oder an einem der Stützelemente (12.1, 12.2) ein Handbügel (10) angebracht ist, der die obere Plattform (3) in deren horizontalen Position nach oben überragt.

## Claims

1. Platform truck (1) for transporting piece goods, in particular a platform truck (1) designed as a trailer for a traction operation, comprising at least two casters (5, 6), a lower platform (2) and an upper platform (3) which is supported by support elements (11.1, 11.2, 12.1, 12.2) and is pivotable from a substantially horizontal position into a steep or vertical position and back again, the upper platform (3) being pivotable from its horizontal position either into a first steep or vertical position about a first pivot axis or into a second steep or vertical position about a second pivot axis, which extends parallel to the first pivot axis, and the support elements (11.1, 11.2, 12.1, 12.2) and the upper platform (3) being provided with pairs of separable articulated elements (16, 17), at least one pair of the articulated elements (16, 17) defining the first pivot axis and at least one further pair of the articulated elements (16, 17) defining the second pivot axis, **characterised in that** the articulated elements (16, 17) which define each pivot axis are provided with at least one releasable locking means (20), each articulated element pair (16, 17) being formed of a U-shaped slide bearing (16) and a round rod (17) which can be inserted therein and is supported by a holder (18), and said locking means (20) being designed as a pivotable catch which encompasses the round rod (17) when in the locked state.

2. Platform truck according to claim 1, **characterised in that** the upper platform (3) is provided with at least one safety device (24, 27), by means of which the upper platform (3) can be fixed in its steep or vertical position to prevent it pivoting back into the horizontal position.

3. Platform truck according to either claim 1 or claim 2, **characterised in that** the upper platform (3) is provided with at least one articulated arm (24) having two or more members, a first member (24.1) of the articulated arm being articulated to one of the support elements (12.1, 12.2) and a second member (24.2) of the articulated arm being articulated to the upper platform (3), and the articulated arm (24) being provided with a helical compression spring or gas spring (27).

4. Platform truck according to any of claims 1 to 3, **characterised in that** the upper platform (3) is provided with handle bars (21, 22) on its outer sides, which extend parallel to the pivot axes of the upper platform (3).

5. Platform truck according to any of claims 1 to 4, **characterised in that** a drawbar (7) and a trailer coupling (8) for a corresponding drawbar (7) of a second platform truck (1) are attached to the lower platform (3), the pivot axes of the upper platform (3) extending parallel to a central axis which extends from the drawbar (7) to the trailer coupling (8).

6. Platform truck according to any of claims 1 to 5, **characterised in that** the support elements (11.1, 11.2, 12.1, 12.2) are formed of interconnected tubes.

7. Platform truck according to any of claims 1 to 6, **characterised in that** a hand grip (10) is attached to the lower platform (2) and/or to one of the support elements (12.1,12.2), which hand grip projects upwards beyond the upper platform (3) when the platform is in its horizontal position.

## Revendications

1. Chariot à plate-forme (1) pour le transport de marchandises de détail, notamment chariot à plate-forme (1) réalisé en tant que remorque pour un mode en traction, comprenant au moins deux galets de roulement (5, 6), une plate-forme inférieure (2) et une plate-forme supérieure (3) portée par des éléments d'appui (11.1, 11.2, 12.1, 12.2) qui peut pivoter d'une position essentiellement horizontale dans une position abrupte ou verticale et inversement, dans lequel la plate-forme supérieure (3) peut pivoter de sa position horizontale au choix autour d'un premier axe de pivotement dans une première position abrupte ou verticale ou autour d'un second axe de pivotement s'étendant parallèlement au premier axe de pivotement dans une seconde position abrupte ou verticale, et dans lequel les éléments d'appui (11.1, 11.2, 12.1, 12.2) et la plate-forme supérieure (3) sont pourvus de paires d'éléments d'articulation (16, 17) pouvant être séparés l'un de l'autre, dans lequel au moins une paire des éléments d'articulation (16, 17) définit le premier axe de pivotement et au moins une autre paire des éléments d'articulation (16, 17) définit le second axe de pivotement, **caractérisé en ce que** les éléments d'articulation (16, 17) définissant l'axe de pivotement respectif sont pourvus d'au moins un moyen de verrouillage amovible (20), dans lequel la paire d'éléments d'articulation respective (16, 17) est formée d'un palier à glissement en forme de U (16) et d'une barre ronde (17) pouvant être insérée dans celui-ci, portée par une fixation (18), et dans lequel le moyen de verrouillage (20) est réalisé en tant que crochet pivotant qui entoure la barre ronde (17) dans l'état de verrouillage.

2. Chariot à plate-forme selon la revendication 1, **caractérisé en ce que** la plate-forme supérieure (3) est pourvue d'au moins un dispositif de fixation (24, 27) au moyen duquel la plate-forme supérieure (3) peut être fixée dans sa position abrupte ou verticale respective à l'encontre d'un pivotement arrière dans la position horizontale.

3. Chariot à plate-forme selon la revendication 1 ou 2, **caractérisé en ce que** la plate-forme supérieure (3) est pourvue d'au moins un bras articulé (24) à deux ou plusieurs membres, dans lequel un premier membre (24.1) du bras articulé est articulé à un des éléments d'appui (12.1, 12.2) et un deuxième membre (24.2) du bras articulé est articulé à la plate-forme supérieure (3), et dans lequel le bras articulé (24) est pourvu d'un ressort cylindrique à pression ou d'un ressort à pression gazeuse (27).

4. Chariot à plate-forme selon l'une quelconque des revendications 1 à 3, **caractérisé en ce que** la plate-forme supérieure (3) est pourvue de manches (21, 22) sur ses côtés externes qui sont disposés en s'étendant parallèlement aux axes de pivotement de la plate-forme supérieure (3).

5. Chariot à plate-forme selon l'une quelconque des revendications 1 à 4, **caractérisé en ce qu'**un timon (7) et un couplage de remorque (8) pour un timon correspondant (7) d'un second chariot à plate-forme (1) sont montés sur la plate-forme inférieure (2), dans lequel les axes de pivotement de la plate-forme supérieure (3) s'étendent parallèlement à un axe médian s'étendant du timon (7) au couplage de remorque (8).

6. Chariot à plate-forme selon l'une quelconque des revendications 1 à 5, **caractérisé en ce que** les éléments d'appui (11.1, 11.2, 12.1, 12.2) sont formés de tuyaux reliés les uns aux autres.

7. Chariot à plate-forme selon l'une quelconque des revendications 1 à 6, **caractérisé en ce qu'**une anse à main (10) que la plate-forme supérieure (3) dépasse vers le haut dans sa position horizontale est montée sur la plate-forme inférieure (2) et/ou sur un des éléments d'appui (12.1,12.2).
